# EUROPEAN PATENT SPECIFICATION

(11) **EP 2 279 090 B1**
(45) Date of publication and mention of the grant of the patent: **25.09.2019**
(21) Application number: 09727724.8
(22) Date of filing: 30.03.2009
(51) Int. Cl.: G01F 23/04, G01F 23/24

(54) **DEVICE FOR DETECTING AND REMOVING WATER IN A FUEL TANK**
VORRICHTUNG ZUM ERFASSEN UND ENTFERNEN VON WASSER IN EINEM BRENNSTOFFBEHÄLTER
DISPOSITIF POUR DÉTECTER ET ÉLIMINER DE L'EAU DANS UN RÉSERVOIR DE CARBURANT

(30) Priority: 31.03.2008 SE 0800717
(43) Date of publication of application: 02.02.2011
(73) Proprietor: Scania CV AB, 151 87 Södertälje (SE)
(72) Inventor: ANDERSSON, Lars, S-611 63 Nyköping (SE); DUVEFELT, Tommy, S-646 92 Gnesta (SE)
(74) Representative: Scania CV AB
(86) International application number: PCT/SE2009/050331
(87) International publication number: WO 2009/123553

(56) References cited:
- EP-A1- 0 497 373
- EP-A1- 0 497 373
- WO-A1-91/00765
- GB-A- 2 065 336
- US-A- 3 279 380
- US-A- 4 296 723
- US-A- 4 595 030
- US-A- 4 595 030
- US-A- 4 728 924
- US-A- 5 879 543

## Description

### BACKGROUND TO THE INVENTION, AND STATE OF THE ART

The present invention relates to a device for detecting and removing water in a fuel tank according to the preamble of claim 1.

There is always risk that water will accumulate in fuel tanks. The accumulation may be due to condensation in the tank or to using fuel of inferior quality. The water, which is of higher density than the fuel, will accumulate on the bottom of the fuel tank. One way of removing the water from the fuel is to arrange a water-separating filter close to the fuel tank. When a vehicle undergoes repair or servicing, the water which has accumulated in the filter is removed. Another solution is to apply a permanent installation in the tank which makes it possible to both detect and remove water from the fuel tank. Such permanent installations are expensive.

US 4 728 924 refers to a portable device for detecting water in fuel tanks. The device comprises a probe adapted to being introduced downwards into a fuel tank, and a manoeuvring unit. A cable connects the probe to the manoeuvring unit. The cable comprises two electrical lines each connected to an electrode. The electrodes protrude from the probe at a distance from one another. When a voltage is applied between the electrodes, the electrical resistance in the region between the electrodes can be estimated. If the region is occupied by water, the electrical resistance will be considerably lower than if the region was occupied by fuel. The manoeuvring unit comprises a control element for activating the device and an alarm device which is activated if water is detected in the fuel tank. If water is detected in the fuel tank, measures have to be taken to evacuate the water from the fuel tank.

Document WO 91/00765 A1 discloses a permanent device for detecting and removing water in a fuel tank.

### SUMMARY OF THE INVENTION

The object of the present invention is to propose a device which makes it possible to both detect and remove water in a fuel tank.

This object is achieved with the device of the kind mentioned in the introduction which is characterised by the features indicated in the characterising part of claim 1. Since fuel is of lower density than water, water accumulates on the bottom in the fuel tank. The device comprises detection means which monitor whether a measuring region contains fuel or water. The device comprises not only said detection means but also a tubular element. If the measuring region contains water, a negative pressure can be created in the tubular element so that the water situated in the fuel tank is drawn out and removed via the tubular element. The removal of the water continues with advantage until no more water is detected in the measuring region. The device thus comprises both detection means for detecting whether a fuel tank contains water and a tubular element with an inlet aperture through which it is possible to remove water in the fuel tank without the device having to be removed from the detecting position. The detection of water in a fuel tank can thus be followed by very rapid removal of the water in the fuel tank.

According to a preferred embodiment of the invention, said detection means are adapted to monitoring a parameter in a measuring region close to the first unit, and the inlet aperture of the elongate tubular element is arranged at the same or a lower height level above the bottom surface than height level of the measuring region above a bottom surface when the first unit is in a detecting position. The inlet aperture of the tubular element is here guaranteed to be situated in a region with water when the measuring region contains water. There is therefore no risk of fuel being drawn out through the tubular element.

The measuring region is with advantage arranged relatively near to the bottom surface so that the fuel tank is substantially totally empty of water when fuel is detected in the measuring region.

According to a preferred embodiment of the invention, the tubular element comprises a connecting means which makes it possible to connect an external pump device to the outlet aperture. With advantage, the connecting means takes the form of a quick-fix connection. If water is detected in a fuel tank, the external pump device can therefore quickly and easily be connected to the tubular element and remove the water from the fuel tank. Substantially any desired types of external pump devices may be used. For example, a spray gun powered by compressed air may be connected to the tubular element to draw the water out from the fuel tank by ejector action. The external pump device may of course already be connected to the device when it monitors whether there is water in a fuel tank. Alternatively, the device may comprise an integrated pump connected to the tubular element. Such a pump may also be of any desired kind. If water is detected in a fuel tank, the pump may in that case be started substantially immediately to remove the water.

According to another preferred embodiment of the invention, the first unit comprises a contact region adapted to being applied in contact with the bottom surface in the fuel tank when the first unit is in a detecting position. The contact region has with advantage a shape substantially corresponding to that of the bottom surface. The contact surface should also be of relatively large extent on the bottom surface so that the first unit stands stably on the bottom surface when it is in a detecting position. The contact surface is thus adapted to being in contact with the bottom surface both when water is detected in the fuel tank and during a possible subsequent stage in which the water is removed from the fuel tank.

According to the invention, the first unit comprises an internal space and at least one aperture which is adapted to making a communicating flow of fuel and water possible between the internal space and a surrounding in the fuel tank when the first unit is in a detecting position. If the inlet aperture of the tubular element is situated within the internal space, said aperture will supply water to the internal space at the same rate as water is drawn out from the internal space. The water level in the internal space can thus substantially continuously be kept at the same level as the water level elsewhere in the fuel tank. If the measuring region is situated in the fuel tank, it may be situated within the internal space or externally to the internal space. If the measuring region is situated within the internal space but the inlet aperture of the tubular element is situated externally to the internal space, said aperture will cause the water level in the internal space to be substantially continuously kept at the same level as the water level elsewhere in the fuel tank. Said aperture comprises with advantage at least one portion situated at a lower level than measuring region when the first unit is in a detecting position. It is thus guaranteed that water can flow between the internal space and a surrounding in the fuel tank when water is pumped out through the tubular element. With advantage, the aperture has a lower portion at substantially the same height as the bottom surface in the fuel tank. The first unit will thus comprise no lower portion which would hinder a communicating flow of water between the internal space and a surrounding in the fuel tank along the bottom surface of the fuel tank. The inlet aperture of the tubular element is with advantage arranged close to the measuring region. Both the measuring region and the inlet aperture of the tubular element are preferably arranged in the internal space of the first unit. The device will therefore be of compact configuration.

According to an embodiment of the invention, said detection means comprise components adapted to measuring the electrical resistance in the measuring region. Water is electrically conductive, whereas fuels such as diesel oil and petrol conduct substantially no electric current. A parameter value which is related to the electrical resistance in the measuring region is therefore a very reliable indication as to whether the measuring region contains water or fuel. The measuring region may be defined by two electrodes arranged at a distance from one another. The current or the resistance may be measured in the measuring region after the electrodes have been subjected to a specified voltage difference.

According to another preferred embodiment of the invention, said monitoring means comprise a control unit adapted to deciding on the basis of information about the value of said parameter as to whether the measuring region contains fuel or water. Such a control unit comprises with advantage suitable electrical components for this purpose. The control unit may comprise stored information which indicates the results corresponding to various parameter values, i.e. whether the measuring region contains water or fuel. The control unit is with advantage arranged in the second unit of the device, which is situated externally to the fuel tank. The device comprises preferably an indicating means adapted to indicating whether the measuring region contains fuel or water. Such an indicating means gives a user instantaneous information about whether the measuring region contains water or fuel. The indicating means may be a light-emitting diode or lamp which lights up if the fuel tank contains water. Other types of indicating means such as alarms or the like may also be used. The indicating means is with advantage arranged in the second unit of the device. Two or more indicating means may also be used to inform a user about the prevailing water level in a fuel tank, in which case the parameter values may be detected in two or more measuring regions arranged at different levels in the fuel tank.

According to an alternative embodiment of the invention, said detection means are adapted to monitoring a parameter in a measuring region which is situated close to the second unit. In this case, the measuring region is situated at a location external to the fuel tank. To detect whether the fuel tank contains water, the pump has therefore to be started and draw up water and/or fuel to the measuring region from a bottom surface in the fuel tank. The pump is kept activated so long as water is detected in the measuring region.

### BRIEF DESCRIPTION OF THE DRAWINGS

A preferred embodiment of the invention is described below by way of example with reference to the attached drawings, in which:
- Fig. 1: depicts a device, according to a first embodiment, for detecting and removing water from a fuel tank,
- Fig. 2: depicts a first unit of the device in Fig. 1,
- Fig. 3: depicts schematically a second unit of the device in Fig. 1 and
- Fig. 4: depicts a device, according to a second embodiment, for detecting and removing water from a fuel tank.

### DETAILED DESCRIPTION OF A PREFERRED EMBODIMENT OF THE INVENTION

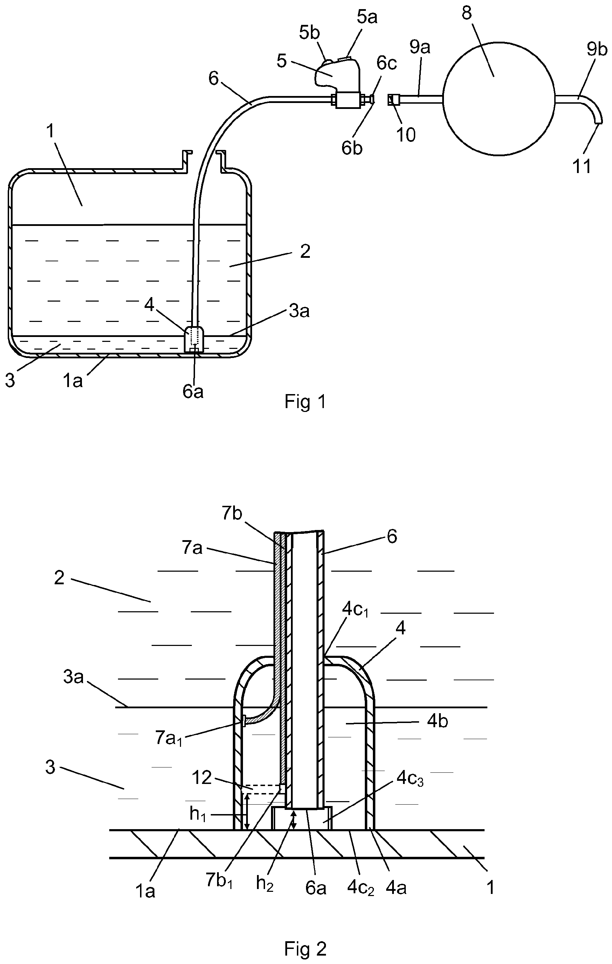

Fig. 1 depicts a fuel tank 1 arranged in a vehicle which is powered by a combustion engine. The fuel tank 1 is filled with fuel exemplified here as diesel oil 2. Water 3 which is of higher density than diesel oil 2 has accumulated on the bottom in the fuel tank 1. The water has accordingly a water level 3a which is related to the amount of water in the fuel tank 1. The development of combustion engines and more advanced engine controls is leading to increased sensitivity to water in the fuel. When a vehicle undergoes servicing or repair, checks are often carried out to detect whether the fuel tank 1 contains water, in which case the water is removed. Fig. 1 depicts a device which makes it possible to both detect water 3 in fuel tanks 1 and to remove the water 3. The device comprises a first unit in the form of a housing 4 adapted to being introduced downwards into the fuel tank 1 and a second unit in the form of a manoeuvring unit 5 adapted to being held by a user. The manoeuvring unit 5 comprises a button 5a for activating the device and an indicating means 5b in the form of a light-emitting diode or the like which lights up if water is indicated in the fuel tank 1. A tubular element such as a hose 6 extends between the housing 4 and the manoeuvring unit 5. The hose 6 has an inlet aperture 6a situated within the housing 4 and an outlet aperture 6b situated close to the manoeuvring unit 5. The hose comprises a connecting means 6c which makes it possible to connect a pump device to the outlet aperture 6b of the hose. The pump device comprises in this case a pump 8, a first hose portion 9a and a second hose portion 9b. The first hose portion 9a is connected to the pump 8 at one end and has a connecting means 10 at an opposite end. The connecting means 10 is adapted to being connected to the connecting means 6c. The second hose portion 9b is connected to the pump 8 at one end and has an outlet aperture 11 at an opposite end.

Fig. 2 depicts the housing 4 in more detail. The housing 4 is made of a material which is of higher density than fuel. The housing 4 is made of a material which has electrically conductive characteristics and good corrosion resistance characteristics. The housing 4 may be made of stainless steel. The housing 4 has in this case a cuplike shape. The hose 6 extends into the housing via an aperture 4c₁ at one end of the housing. The housing 4 has at an opposite end a larger aperture 4c₂ adapted to being directed downwards when the housing 4 is in a detecting position. The housing 4 comprises a contact region 4a which extends round the downward-directed aperture 4c₂. The contact region 4a is adapted to being in contact with a bottom surface 1a in the fuel tank when the housing 4 is in a detecting position in the fuel tank 1. The contact region 4a has a shape corresponding to that of the bottom surface 1a so that the housing 4 can stand stably on the bottom surface 1a. The contact region 4a and the bottom surface 1a are with advantage planar. The housing 4 comprises an internal space 4b adapted to being filled with fuel and/or water when it is in a detecting position. The housing 4 comprises at least one aperture 4c₃ which makes communication of fuel and/or water possible between the internal space 4b of the housing and a surrounding in the fuel tank 1. This aperture 4c₃ extends right down to the contact surface 4a and therefore to the bottom surface 1a. Two electric cables 7a, 7b with insulating sheaths are arranged parallel with the hose 6 so that they have an extent between the housing 4 and the manoeuvring unit 5. One cable 7a comprises an electrical connection 7a₁ to the housing 4. The other cable 7b comprises an electrode 7b₁ or the like arranged at a predetermined height h₁ above the contact region 4a of the housing. Applying a voltage between the electric cables 7a, 7b will cause a voltage difference between the housing 4 and the electrode 7b₁. The electrical resistance can therefore be estimated in a measuring region 12 which extends between the housing 4 and the electrode 7b₁. If the measuring region 12 contains water, the electrical resistance will be considerably lower than if the measuring region 12 contained fuel. The measuring region 12 is situated at the height h₁ above the bottom surface 1a when the housing 4 is in a detecting position. The inlet aperture 6a of the hose is situated at a height level h₂ above the bottom surface 1a when the housing 4 is in a detecting position. The inlet aperture 6a is situated at a lower height level h₂ than the height level h₁ above the bottom surface 1a.

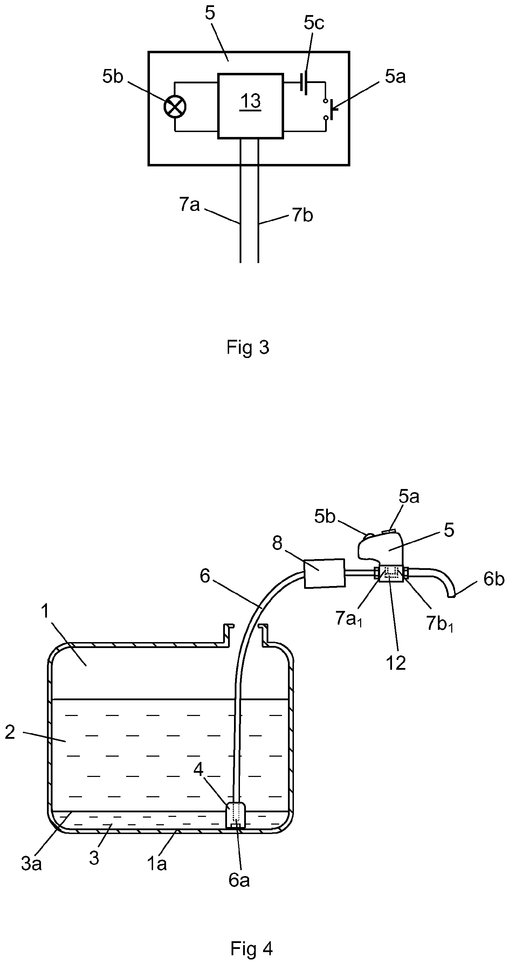

Fig. 3 depicts schematically the most relevant components of the manoeuvring unit 5. The manoeuvring unit 5 comprises an electrical control unit 13. The electrical control unit 13 is activated by a first circuit comprising said circuit-breaker 5a which is adapted to being operated by a user and a voltage source 5c which may be a battery. The electrical control unit 13 is connected to a second circuit which comprises the indicating means 5b. The electrical control unit 13 is also connected to the electric cables 7a, 7b. The electrical control unit 13 comprises components which make it possible to apply a specified voltage in the electric cables 7a, 7b. Applying a voltage to the electric cables 7a, 7b creates an electrical circuit whereby the current and/or the electrical resistance in the measuring region 12 can be estimated.

During vehicle servicing or repair, the device is used for detecting and removing any water in the vehicle's fuel tanks 1. When a fuel tank 1 has been opened, the housing 4 is introduced downwards into the fuel tank 1. As the housing 4 is made of a material which is of higher density than fuel 2 in the fuel tank 1, the housing 4 sinks quickly down to the bottom in the fuel tank. The housing 4 may be provided with undepicted further apertures for evacuation of air from the internal space 4b. When the contact region 4a of the housing comes into contact with the bottom surface 1a, the housing 4 has reached a detecting position in the fuel tank 1. As the housing comprises at least one aperture 4c₃ which allows a communicating flow between the internal space 4b of the housing and the rest of the fuel tank, the result is the same water level 3a in the internal space 4b as elsewhere in the fuel tank. When the housing 4 has reached the detecting position, the circuit-breaker 5a is pressed in so that the power source 5c is connected to the control unit 13. The control unit 13 supplies the electric cables 7a, 7b with voltage. A voltage difference is thus created between the housing 4 and the electrode 7bi. One of the cables 7a, 7b may be earthed. The measuring region 12 is situated in the region where the distance between the housing 4 and the electrode 7b₁ is shortest. Water 3 is a good conductor of electric current, whereas diesel oil is substantially not electrically conductive. The control unit 13 can therefore estimate whether an electrical current occurs in the measuring region 12, i.e. between the housing 4 and the electrode 7b₁. If the control unit 13 receives information which indicates that substantially no electrical current occurs in the measuring region 12, it may be found that the measuring region contains fuel which is of high resistivity. If the control unit 13 receives information which indicates that an electric current occurs in the measuring region 12, it may be found that it contains water which is of low resistivity, in which case the control unit 13 activates the indicating means 5b. A user thereby receives a quick indication as to whether the fuel tank 1 contains water 3 in the measuring region 12, in which case the water level 3a in the fuel tank 1 is at an unacceptable level.

In cases where such an unacceptable water level 3a is indicated, the pump device is connected, by the connecting means 6c, 10, to the device. The connecting means 6c, 10 are with advantage of a quick-fix connection type. Thereafter the user activates the pump 8 so that a negative pressure is created within the hose 6. As the inlet aperture 6a is situated at a lower level than the measuring region 12 which contains water, it is guaranteed that only water will be drawn into the hose 6 via inlet aperture 6a and out from the fuel tank 1 via outlet aperture 11. With advantage, the control unit 13 measures continuously the current and/or the electrical resistance in the measuring region 12 when the pump 8 is activated. The water 3 drawn out from the internal space 4b is continuously replaced by water which flows in through the aperture 4c₃, thereby maintaining the same water level 3a in the internal space 4b of the housing as elsewhere in the fuel tank 1. When the control unit 13 receives information which indicates that the electrical resistance suddenly increases markedly in the measuring region 12, it may be found that the water level 3a has sunk to a lower level than level hi of the measuring region. The measuring region 12 will then contain diesel oil 2. The control unit 13 will deactivate the indicating means 5b so that the user receives an immediate indication that the water level 3a in the fuel tank 1 has now sunk to an acceptable level. The user will switch off the pump 8 so that there is no risk of fuel being pumped out. The device according to the invention thus both provides very rapid and reliable detection of the presence of an unacceptable amount of water 3 in the fuel tank 1 and effects removal of the water so that the water level 3a in the fuel tank 1 sinks to an acceptable value.

Fig. 4 depicts an alternative embodiment of the invention. In this case the device comprises the pump 8. The pump 8 is here arranged upstream of the manoeuvring unit 5, but might equally well be arranged downstream of, or in, the manoeuvring unit 5. With this device there is therefore no need for any external pump to be connected. In this case, electrodes 7a₁, 7b₁ are so arranged that they extend into a passage for fuel and/or water in the manoeuvring unit 5. When a voltage is applied between the electrodes 7a₁, 7b₁ the electrical resistance can be estimated in a measuring region 12 in the passage. To detect whether the fuel tank 1 contains water, the pump 8 has in this case to be started first. The fuel and/or the water is/are drawn into the hose 6 via its inlet aperture 6a situated close to the bottom surface 1a of the fuel tank. The fuel and/or the water thus reach the measuring region 12 in the manoeuvring unit 5. On the basis of information about the electrical resistance in the measuring region 12, the control unit 13 can decide whether the measuring region 12 contains water or fuel. The pump 8 is kept activated so long as water is detected in the measuring region 12. As soon as fuel is detected in the measuring region 12, the pump 8 is switched off. The pump 8 may be switched off automatically by the control unit 13 or manually by a user.

The invention may be varied within the scopes of the claims. A device with an integrated pump 8 may have a measuring region 12 close to the housing 4 and a device with a connectable pump 8 may have a measuring region 12 close to the manoeuvring unit 5.

## Claims

1. A device for detecting and removing water in a fuel tank (1) during vehicle servicing or repair, which device comprises a housing (4) having a higher density than fuel (2), and detection means (7a, 7b, 13) adapted to monitoring a parameter in a measuring region (12) and to deciding whether the measuring region (12) contains fuel (2) and/or water (3), the device further comprises a manoeuvring unit (5) adapted to being situated externally to the fuel tank (1), wherein the manoeuvring unit (5) is adapted to being held by a user and comprises a button (5a) for activating the device and an indicating means (5b) in the form of a light-emitting diode or the like, which lights up if water is indicated in the fuel tank (1), the manoeuvring unit (5) also comprises an electrical control unit (13), which is part of the detection means (7a, 7b, 13), **characterized by** an elongate tubular element (6) which has an inlet aperture (6a) arranged within the housing (4) and an outlet aperture (6b) adapted to being arranged at a location external to the fuel tank (1), wherein the tubular element (6) extends between the housing (4) and the manoeuvring unit (5), wherein the housing (4) is adapted to being introduced downwards into the fuel tank (1) after the fuel tank (1) has been opened, and to being applied in a detecting position on a bottom surface (1a) in the fuel tank (1), the housing (4) comprising an internal space (4b) and at least one aperture (4_{C3}) which makes communication of fuel and/or water possible between the internal space (4b) of the housing (4) and a surrounding in the fuel tank (1), the tubular element (6) comprises a connecting means (6c) which makes it possible to connect an external pump device (8-11) to the outlet aperture (6b), or that the device comprises a pump (8) which is connected to the tubular element (6) outside of the fuel tank, thereby making it possible, if water is detected in the measuring region (12), for the external pumping device (8-11) or the pump (8) to be activated so that the water in the measuring region (12) is drawn out and removed via tubular element (6) and in that the housing (4) comprises a contact region (4a) adapted to being applied in contact with the bottom surface (1a) in the fuel tank when the housing (4) is in the detecting position.

2. A device according to claim 1, **characterised in that** said detection means (7a, 7b, 13) are adapted to monitoring a parameter in a measuring region (12) close to the housing (4) and that the inlet aperture (6a) of the elongate tubular element (6) is arranged at the same or a lower height level (h₂) above the bottom surface (1a) than height level (h₁) of the measuring region above a bottom surface (1a) when the housing (4) is in a detecting position.

3. A device according to any one of the foregoing claims, **characterised in that** said detection means comprise components (7a, 7b, 13) which make it possible to measure a parameter which is related to the electrical resistance in the measuring region (12).

4. A device according to any one of the foregoing claims, **characterised in that** said detection means comprise the control unit (13) adapted to deciding on the basis of information about the value of said parameter as to whether the measuring region (12) contains fuel (2) and/or water (3).

5. A device according to any one of the foregoing claims, **characterised in that** the device comprises an indicating means in the form of an alarm adapted to indicating whether the measuring region (12) contains fuel (2) and/or water (3).

## Patentansprüche

1. Anordnung zum Erfassen und Entfernen von Wasser in einem Kraftstofftank (1) während einer Fahrzeugwartung oder -reparatur, wobei die Anordnung ein Gehäuse (4) mit einer höheren Dichte als Kraftstoff (2) und eine Erfassungseinrichtung (7a, 7b, 13) aufweist, die dazu eingerichtet ist, einen Parameter in einer Messregion (12) zu überwachen und zu entscheiden, ob die Messregion (12) Kraftstoff (2) und/oder Wasser (3) enthält, wobei die Einrichtung ferner eine Manövriereinheit (5) umfasst, die dazu eingerichtet ist, sich außerhalb des Kraftstofftanks (1) zu befinden, wobei die Manövriereinheit (5) dazu eingerichtet ist, von einem Benutzer gehalten zu werden und einen Knopf (5a) zum Aktivieren der Einrichtung und eine Anzeigeeinrichtung (5b) in Gestalt einer Leuchtdiode oder ähnlichem aufweist, die aufleuchtet, falls Wasser in dem Kraftstofftank (1) angezeigt wird, wobei die Manövriereinheit (5) ferner eine elektrische Steuereinheit (13) aufweist, die Teil der Erfassungseinrichtung (7a, 7b, 13) ist, **gekennzeichnet durch** ein langgestrecktes rohrförmiges Bauteil (6), das eine innerhalb des Gehäuses (4) angeordnete Einlassöffnung (6a) und eine Auslassöffnung (6b) hat, welche dazu eingerichtet ist, an einer Stelle außerhalb des Kraftstofftanks (1) angeordnet zu werden, wobei das rohrförmige Bauteil (6) zwischen dem Gehäuse (4) und der Manövriereinheit (5) verläuft, wobei das Gehäuse (4) dazu eingerichtet ist, nach unten in den Kraftstofftank (1) eingeführt zu werden, nachdem der Kraftstofftank (1) geöffnet worden ist, und in einer Erfassungsposition auf einer Bodenfläche (1a) in dem Kraftstofftank (1) verwendet zu werden, wobei das Gehäuse (4) einen Innenraum (4b) und wenigstens eine Öffnung (4_{C3}) umfasst, die eine Übertragung von Kraftstoff und/oder Wasser zwischen dem Innenraum (4b) des Gehäuses (4) und einer Umgebung in dem Kraftstofftank (1) ermöglicht, wobei das rohrförmige Bauteil (6) eine Verbindungseinrichtung (6c) aufweist, die es ermöglicht, eine externe Pumpeinrichtung (8-11) mit der Auslassöffnung (6b) zu verbinden, oder dass die Anordnung eine Pumpe (8) enthält, die mit dem rohrförmigen Bauteil (6) außerhalb des Kraftstofftanks verbunden ist, was es ermöglicht, falls Wasser in der Messregion (12) festgestellt wird, die externe Pumpeinrichtung (8-11) oder die Pumpe (8) zu aktivieren, so dass das Wasser in der Messregion (12) herausgefördert und über das rohrförmige Bauteil (6) entfernt wird, und dass das Gehäuse (4) einen Kontaktbereich (4a) aufweist, der dazu eingerichtet ist, in Berührung mit der Bodenfläche (1a) in dem Kraftstofftank gebracht zu werden, wenn sich das Gehäuse (4) in der Erfassungsposition befindet.

2. Anordnung nach Anspruch 1, **dadurch gekennzeichnet, dass** die Erfassungseinrichtung (7a, 7b, 13) dazu eingerichtet ist, einen Parameter in einer Messregion (12) nahe dem Gehäuse (4) zu überwachen und dass die Einlassöffnung (6a) des langgestreckten rohrförmigen Bauteils (6) auf demselben oder einem niedrigeren Höhenniveau (h₂) über der Bodenfläche (1a) angeordnet ist als ein Höhenniveau (h₁) der Messregion über einer Bodenfläche (1a), wenn das Gehäuse (4) sich in einer Erfassungsposition befindet.

3. Anordnung nach einem der vorhergehenden Ansprüche,
**dadurch gekennzeichnet, dass** die Erfassungseinrichtung Bauteile (7a, 7b, 13) aufweist, die es ermöglichen, einen Parameter zu messen, der mit dem elektrischen Wiederstand in der Messregion (12) in Beziehung steht.

4. Anordnung nach einem der vorhergehenden Ansprüche,
**dadurch gekennzeichnet, dass** die Erfassungseinrichtung die Steuereinheit (13) umfasst, welche dazu eingerichtet ist, basierend auf Information über den Wert des Parameters zu entscheiden, ob die Messregion (12) Kraftstoff (2) und/oder Wasser (3) enthält.

5. Anordnung nach einem der vorhergehenden Ansprüche,
**dadurch gekennzeichnet, dass** die Anordnung eine Anzeigeeinrichtung in Gestalt einer Warneinrichtung aufweist, die dazu eingerichtet ist anzugeben, ob die Messregion (12) Kraftstoff (2) und/oder Wasser (3) enthält.

## Revendications

1. Dispositif pour la détection et l'extraction d'eau dans un réservoir de carburant (1) durant l'entretien ou la réparation d'un véhicule, lequel dispositif comprend un boîtier (4) ayant une densité plus élevée que le carburant (2) et des moyens de détection (7a, 7b, 13) adapté pour la surveillance d'un paramètre dans une région de mesure (12), et pour décider si la région de mesure (12) contient du carburant (2) et/ou de l'eau (3), le dispositif comprenant en outre une unité de manoeuvre (5) adaptée pour être située à l'extérieur du réservoir de carburant (1), dans lequel l'unité de manoeuvre (5) est adaptée pour être tenue par un utilisateur et comprend un bouton (5a) pour l'activation du dispositif et un moyen d'indication (5b) sous la forme d'une diode électroluminescente ou similaire, qui s'allume si de l'eau est indiquée dans le réservoir de carburant (1), l'unité de manoeuvre (5) comprend également une unité de commande électrique (13), qui fait partie des moyens de détection (7a, 7b, 13), **caractérisée par** un élément tubulaire allongé (6) qui a une ouverture d'entrée (6a) agencée à l'intérieur du boitier (4) et une ouverture de sortie (6b) adaptée pour être agencée à un emplacement extérieur à l'extérieur du réservoir de carburant (1), dans lequel l'élément tubulaire (6) s'étend entre le boîtier (4) et l'unité de manoeuvre (5), dans lequel le boîtier (4) est adapté pour être introduit vers le bas dans le réservoir de carburant (1) après que le réservoir de carburant (1) a été ouvert, et pour être appliqué dans une position de détection sur une surface de fond (1a) dans le réservoir de carburant (1), le boîtier (4) comprenant un espace interne (4b) et au moins une ouverture (4_{C3}) qui permet une communication de carburant et/ou d'eau entre l'espace interne (4b) du boîtier (4) et un environnement dans le réservoir de carburant (1), l'élément tubulaire (6) comprend un moyen de connexion (6c) permettant de connecter un dispositif de pompe externe (8-11) à l'ouverture de sortie (6b), ou en ce que le dispositif comprend une pompe (8) qui est connectée à l'élément tubulaire (6) à l'extérieur du réservoir de carburant, permettant ainsi, si de l'eau est détectée dans la zone de mesure (12), au dispositif de pompage externe (8-11) ou à la pompe (8) d'être activé de sorte que l'eau dans la zone de mesure (12) soit extraite et évacuée via un élément tubulaire (6) et en ce que le boîtier (4) comprend une zone de contact (4a) adaptée pour être appliquée en contact avec la surface de fond (1a) dans le réservoir de carburant lorsque le boîtier (4) est en position de détection.

2. Dispositif selon la revendication 1, **caractérisé en ce que** lesdits moyens de détection (7a, 7b, 13) sont adaptés à la surveillance d'un paramètre dans une région de mesure (12) près du boîtier (4) et que l'ouverture d'entrée (6a) de l'élément tubulaire allongé (6) est agencée au même niveau ou à un niveau de hauteur inférieur (h₂) au-dessus de la surface de fond (1a) au niveau de la hauteur (h₁) de la région de mesure au-dessus d'une surface de fond (1a) lorsque le boîtier (4) est en position de détection.

3. Dispositif selon l'une quelconque des revendications précédentes, **caractérisé en ce que** lesdits moyens de détection comprennent des composants (7a, 7b, 13) qui permettent de mesurer un paramètre qui est lié à la résistance électrique dans la région de mesure (12).

4. Dispositif selon l'une quelconque des revendications précédentes, **caractérisé en ce que** lesdits moyens de détection comprennent l'unité de commande (13) adaptée à la décision sur la base d'informations sur la valeur dudit paramètre pour déterminer si la région de mesure (12) contient du carburant (2) et/ou de l'eau (3).

5. Dispositif selon l'une quelconque des revendications précédentes, **caractérisé en ce que** le dispositif comprend un moyen d'indication sous la forme d'une alarme adaptée pour l'indication de si la région de mesure (12) contient du carburant (2) et/ou de l'eau (3).
